**Europäisches Patentamt**

**European Patent Office**

**Office européen des brevets**

(19)

(11) Veröffentlichungsnummer : **0 436 045 B1**

(12)

# EUROPÄISCHE PATENTSCHRIFT

(45) Veröffentlichungstag der Patentschrift :
**09.12.92 Patentblatt 92/50**

(51) Int. Cl.$^5$ : **C03C 17/36**

(21) Anmeldenummer : **89250127.1**

(22) Anmeldetag : **21.12.89**

(54) **Verfahren zum Herstellen einer vorgespannten oder gebogenen Glasscheibe mit rückseitiger Beschichtung, danach hergestellte Glasscheibe sowie deren Verwendung.**

(30) Priorität : **28.01.89 DE 3902596**

(43) Veröffentlichungstag der Anmeldung :
**10.07.91 Patentblatt 91/28**

(45) Bekanntmachung des Hinweises auf die
Patenterteilung :
**09.12.92 Patentblatt 92/50**

(84) Benannte Vertragsstaaten :
**AT BE CH DE ES FR GB IT LI LU NL SE**

(56) Entgegenhaltungen :
**EP-A- 0 224 704**
**EP-A- 0 233 003**
**EP-A- 0 281 894**
**EP-A- 0 301 755**
**US-A- 2 596 515**
**US-A- 4 322 130**

(73) Patentinhaber : **FLACHGLAS
AKTIENGESELLSCHAFT
Otto-Seeling-Promenade 10-14
W-8510 Fürth (DE)**

(72) Erfinder : **Hölscher, Heinz W., Dr. Dipl.-Phys.
Bülowstrasse 50
W-4354 Datteln (DE)**

(74) Vertreter : **Goddar, Heinz J., Dr. et al
FORRESTER & BOEHMERT
Franz-Joseph-Strasse 38
W-8000 München 40 (DE)**

## Beschreibung

Die Erfindung betrifft ein Verfahren zum Herstellen einer vorgespannten oder gebogenen, mit einer transmissionssenkenden Beschichtung versehenen Glasscheibe, bei dem auf eine Seite der Glasscheibe mindestens eine Metallschicht mit einem überwiegenden Gehalt an mindestens einem Metall oder einer Metallegierung aus den Elementen mit den Ordnungszahlen 22 bis 28 des Periodischen Systems und hierauf eine metallhaltige Schutzschicht aufgebracht werden und anschließend ein thermischer Vorspann- oder Biegeprozeß in Luft bei einer Temperatur zwischen etwa 580°C und 680°C durchgeführt wird, wobei Dicke und Material der Schutzschicht so gewählt werden, daß beim Vorspann- oder Biegeprozeß keine nennenswerte Sauerstoffdiffusion bis zu der Metallschicht stattfindet, eine danach hergestellte Glasscheibe sowie deren Verwendung.

Aus der DE-OS 35 44 840 ist ein Verfahren der vorstehend angegebenen Art bekannt, bei dem die Metallschicht in einer derartigen Dicke aufgebracht wird, daß sich die Glasscheibe infolge der reduzierten Transmission als Sonnenschutzscheibe eignet, wobei die Schutzschicht aus Metall- oder Metallmischoxid besteht.

Das bekannte Verfahren hat sich durchaus bewährt, jedoch eignet es sich nicht ohne weiteres zum Herstellen von Glasscheiben mit rückseitiger, undurchsichtiger, reflektierender ($R_L$ typischerweise im Bereich von 50 %) Beschichtung, wie sie beispielsweise als Rückblickspiegel oder als Fassadenplatten, insbesondere optisch an Sonnenschutzfenster angepaßte Verkleidungsplatten, Anwendung finden (US-PS 25 96 515).

Außerdem ist die bei dem bekannten Verfahren erforderliche Einstellung der dort vorgesehenen unterstöchiometrischen Zusammensetzung der Schutzschicht verfahrensmäßig aufwendig, wobei ein weiteres Problem darin besteht, daß die Beschichtung vor der Durchführung des Vorspann- oder Biegeprozesses verhältnismäßig empfindlich ist.

Aus der EP-OS 0 233 003 ist es bereits bekannt, hochtransparente Silberschichtsysteme dadurch biegbzw. vorspannbar zu machen, daß auf die auf den Glasträger aufgebrachte Silberschicht eine dünne Schutzschicht aus Aluminium, Titan, Zink, Tantal oder Zirkon aufgebracht wird, an die sich eine Metalloxid-Interferenzschicht anschließt. Die Verwendung von Aluminium als äußere Schutzschicht für die Metallschicht nach dem gattungsbildenden Stand der Technik führt jedoch zu verfahrensmäßig nur schwer beherrschbaren Problemen, weil die Aluminiumschicht relativ weich und daher kratz- und abriebempfindlich ist, so daß es im Produktionsbetrieb bei der Handhabung bzw. beim Schneiden der beschichteten Bandmaße leicht zu einer Beschädigung der Schutzschicht kommen kann, die jedoch unweigerlich einen Kanal für Sauerstoffdiffusion zur Metallschicht bildet und daher eine Zerstörung der Metallschicht beim Biege- oder Vorspannprozeß bewirkt.

Der Erfindung liegt die Aufgabe zugrunde, das Verfahren der eingangs genannten Art dahingehend weiterzubilden, daß es die Herstellung von mit rückseitiger, undurchsichtiger, reflektierender Beschichtung versehenen Glasscheiben, wie sie beispielsweise als Rückblickspiegel oder Fassadenplatten verwendbar sind, ermöglicht, wobei die Beschichtung bereits vor dem Biege- oder Vorspannprozeß verhältnismäßig kratz- und abriebunempfindlich sein soll, unter zusätzlicher Vereinfachung des Beschichtungsverfahrens.

Erfindungsgemäß wird diese Aufgabe in Weiterbildung des gattungsgemäßen Verfahrens dadurch gelöst, daß bei rückseitiger Anordnung der durch ausreichende Dicke undurchsichtigen, reflektierenden Metallschicht die Schutzschicht aus einer Legierung von Aluminium mit Ti und/oder Zr ausgebildet wird.

Dabei kann die Schutzschicht einen Ti- und/oder Zr-Gehalt von mindestens 10 Atom-% aufweisen.

Ferner schlägt die Erfindung vor, daß die Schutzschicht einen Ti- und/oder Zr-Gehalt von mindestens 20 Atom-% aufweist.

Dabei kann so vorgegangen werden, daß die vorzugsweise aus einer AlTi-Legierung ohne Zr-Anteil bestehende Schutzschicht einen Ti-Gehalt von 30 bis 50 Atom-%, besonders bevorzugt einen Ti-Gehalt von etwa 40 Atom-%, aufweist.

Eine weitere Ausführungsform der Erfindung sieht vor, daß die vorzugsweise aus einer AlZr-Legierung ohne Ti-Anteil bestehende Schutzschicht einen Zr-Gehalt von 25 bis 45 Atom-%, besonders bevorzugt einen Zr-Gehalt von etwa 35 Atom-%, aufweist.

Eine weitere Ausführungsform des erfindungsgemäßen Verfahrens ist dadurch gekennzeichnet, daß die Schutzschicht in einer Dicke von 10 bis 50 nm aufgebracht wird.

Dabei kann vorgesehen sein, daß die Schutzschicht in einer Dicke von 20 bis 30 nm aufgebracht wird.

Die Erfindung schlägt auch vor, daß auf den Glasträger vor dem Aufbringen der Metallschicht eine Haftschicht aus mindestens einem der Metalloxide aus der Gruppe $TiO_2$, $Ta_2O_5$, $ZrO_2$ und $SiO_2$ aufgebracht wird.

Eine bevorzugte Ausführungsform der Erfindung ist dadurch gekennzeichnet, daß die Beschichtung zumindest teilweise durch Magnetron-Kathodenzerstäubung aufgebracht wird.

Dabei kann vorgesehen sein, daß die Schutzschicht durch gleichzeitiges oder alternierendes Sputtern von zwei Kathoden mit einem Al-Target und einem Ti- und/oder Zr-Target aufgebracht wird.

Alternativ hierzu kann auch so vorgegangen werden, daß die Schutzschicht durch Sputtern eines schmelz- oder pulvermetallurgisch erzeugten Legierungstargets aufgebracht wird.

Ferner sind Gegenstand der Erfindung die nach dem erfindungsgemäßen Verfahren hergestellte Glasscheibe sowie deren Verwendung als Rückblickspiegel, Fassadenplatte oder dekoratives Paneel.

Der Erfindung liegt die überraschende Erkenntnis zugrunde, daß es gelingt, beispielsweise als Rückblickspiegel oder Fassadenplatten, insbesondere Verkleidungsplatten, optisch angepaßt an Sonnenschutzfenster, geeignete Glasscheiben mit ausgezeichneter Kratz- und Abriebbeständigkeit sowohl unmittelbar nach dem Beschichtungsvorgang als auch nach dem Biege- oder Vorspannprozeß unter ausgezeichnetem Schutz der Metallschicht gegen Sauerstoffeinfluß beim Biegen bzw. Vorspannen dadurch herzustellen, daß auf die Metallschicht in der beanspruchten Weise eine binäre oder auch ternäre Aluminiumlegierungsschicht mit verhältnismäßig hohem Titan- bzw. Zirkonanteil aufgebracht wird. Dies war um so weniger zu erwarten, als Versuche mit reinen Titan- bzw. Zirkon-Deckschichten nicht zu dem gewünschten Schutz für die als Reflexionsschicht ausgebildete Metallschicht führen, weil sie zwar beim Biege- oder Vorspannprozeß in Luft oxidieren, anders jedoch als die erfindungsgemäß vorgesehene Aluminiumlegierungsschicht, die beim Biege- oder Vorspannprozeß oberflächlich eine dichte Oxidschicht bildet, keine ausreichende Sauerstoffschutzwirkung für die Metallschicht zeigen.

Während, wie beansprucht, die Beschichtung des Glasträgers erfindungsgemäß grundsätzlich auf unterschiedliche Weise erfolgen kann, z. B. durch thermische Verdampfung oder Elektronenstrahl-Vakuumbedampfung, aber auch durch CVD-Verfahren, ist es besonders vorteilhaft, ein Magnetron-Sputterverfahren vorzusehen. Erfolgt dabei die Beschichtung durch alternierendes Sputtern von zwei Kathoden mit einem Aluminiumtarget und einem Titan- bzw. Zirkon-Target, so bilden sich Sandwich-Strukturen, die aus sehr dünnen Einzelschichten von 0,1 bis 1 nm bestehen. Besonders vorteilhaft ist die Verwendung der Magnetron-Kathodenzerstäubung von Legierungstargets in nicht-reaktiver Atmosphäre, z. B. Argon, wie sie auch beim gattungsgemäßen Verfahren vorgesehen sein kann.

Als besonderer Vorteil ist dabei zu werten, daß das erfindungsgemäß verwendete Schichtsystem in seiner einfachsten Form, nämlich mit der Schichtfolge Glasscheibe/Metallschicht/Aluminiumlegierung, ein rein metallisches System ist, zu dessen Herstellung also Beschichtungsanlagen ohne aufwendige Schleusen zwischen den einzelnen Beschichtungskammern ausreichen. Dies führt zu deutlich verminderten Herstellungskosten.

Nachstehend sind Ausführungsbeispiele der Erfindung anhand der schematischen Zeichnung im einzelnen erläutert. Dabei zeigt:

Fig. 1 ein erstes Ausführungsbeispiel einer nach dem erfindungsgemäßen Verfahren herstellbaren Glasscheibe im Schnitt senkrecht zur Scheibenebene; und

Fig. 2 ein weiteres Ausführungsbeispiel einer nach dem erfindungsgemäßen Verfahren herstellbaren Glasscheibe, ebenfalls im Schnitt senkrecht zur Scheibenebene.

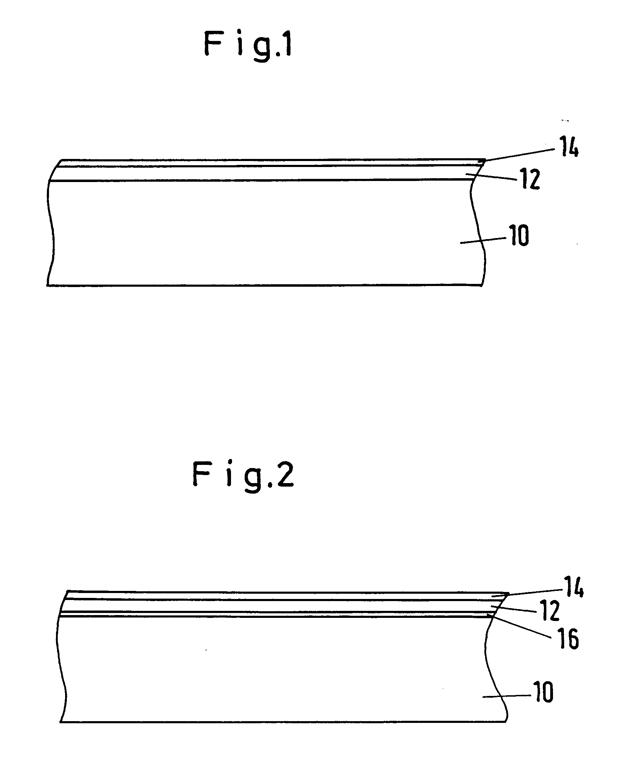

Bei dem in Fig. 1 gezeigten Ausführungsbeispiel ist auf einen Glasträger 10 eine Metallschicht 12 aus Chrom mit einer Dicke von 60 nm aufgebracht, an die eine Schutzschicht 14 mit einer Dicke von 20 nm anschließt, die aus einer Al-Ti-Legierung besteht. Beim Ausführungsbeispiel von Fig. 2, bei dem auf den Glasträger 10 ebenfalls eine Metallschicht 12 und eine Schutzschicht 14 der beim Ausführungsbeispiel gemäß Fig. 1 vorgesehen Art aufgebracht sind, ist zwischen dem Glasträger 10 und der Metallschicht 12 eine Haftschicht 16 aus $Ta_2O_5$ mit einer Dicke von 70 nm angeordnet.

Glasscheiben der in Fig. 1 und 2 wiedergegebenen Art sind bei entsprechender Vorgehensweise nach den nachstehend beschriebenen Beispielen herstellbar:

Beispiel 1:

Auf einen Glasträger 10 aus Floatglas wurde mittels DC-Magnetron-Kathodenzerstäubung zunächst eine Chromschicht mit einer Dicke von 60 nm aufgebracht, deren optische Transmission weniger als 1 % betrug. Auf die Chromschicht 12 wurde mittels eines pulvermetallurgisch hergestellten Targets mit 60 Atom-% Aluminium und 40 Atom-% Titan eine Al-Ti-Schutzschicht 14 in einer Dicke von etwa 25 nm aufgesputtert. Für den Beschichtungsprozeß wurde der Rezipient der Anlage bis auf $5 \cdot 10^{-3}$ Pa ausgepumpt und anschließend bis auf $5 \cdot 10^{-1}$ Pa mit reinem Argon geflutet. Die Abmessung des Glasträgers betrug 10 cm x 10 cm.

Die beschichteten Glasscheiben 10 wurden anschließend in einem Laborofen zur Simulation des Biege- und Vorspannprozesses für 5 Minuten bei 670°C getempert. Zusatzversuche haben gezeigt, daß die Schichtkombination Cr-AlTi bis zu 9 Minuten getempert werden kann, ohne daß die Chrom-Metallschicht 12 zerstört wird. Die Feuchtigkeitsbeständigkeit der Gesamtbeschichtung wurde bei 40°C und 100 % relativer Luftfeuchtigkeit überprüft, wobei sich keine Schichtbeschädigungen ergaben. Im Anschluß an das Tempern hatte die Glasscheibe bei Betrachtung von der unbeschichteten Seite des Glasträgers aus eine so hohe Reflexion, daß sie ohne weiteres als Rückblickspiegel oder Fassadenelement verwendbar war.

Die Kratz- und Abriebbeständigkeit des Schichtsystems wurde wie folgt getestet: Die zu testende Glasscheibe wurde auf einen Drehteller montiert. An einem starren Arm wurde ein rauher Filz befestigt, der auf der Beschichtung auflag (Auflagefläche 1 cm x 1 cm). Dieser Arm wurde mit einem definierten Gewicht belastet und wirkte mit einer entsprechenden Kraft auf die Beschichtung der Testscheibe ein. Der Filz beschrieb Kreisbahnen auf den Testscheiben. Gezählt wurde die Zahl der Umdrehungen. Die derart behandelten Scheiben wurden anschließend für 5 Minuten in einem Laborofen getempert. Hierbei oxidierten die Bereiche der Metallschicht 12 dort auf, wo die Schutzschicht 14 nicht mehr hinreichend dick war. In diesen Bereichen wurde die Beschichtung transparent und zeigte einen guten Kontrast zu der optisch-dichten Funktionsschicht. Nach dem Tempern wurden im Durchlicht einer intensiven Lichtquelle die entstandenen Riefen abgezählt.

Die Ergebnisse dieses Testes, der sich an der Praxis orientiert, sind in der nachstehenden Tab. 1 dargestellt. Als Referenz sind dabei Werte angegeben, die sich bei Abdeckung der Chrom-Metallschicht 12 durch eine reine Aluminium-Schicht ergeben. Bereits nach einer Umdrehung ist diese Schicht stark angegriffen. Bei erfindungsgemäßer Abdeckung mittels einer Al-Ti-Schutzschicht 14 hingegen weist die Schicht auch nach 200 Umdrehungen noch deutlich weniger Riefen auf.

| Zahl der Umdrehungen | Cr - Al (Vergleichsscheibe) | Cr - AlTi (Beispiel 1) |
|---|---|---|
| 1 | 48 | 0 |
| 50 | zerstört | 2 |
| 100 | zerstört | 7 |
| 150 | zerstört | 11 |
| 200 | zerstört | 14 |

Tab. 1: Ergebnisse des Kratz- bzw. Abriebtestes, wobei die Angaben der zweiten und dritten Spalte in Riefen pro cm lauten.

Beispiel 2:

Die in Beispiel 1 genannte Al-Ti-Schutzschicht 14 wurde hier durch eine Al-Zr-Schutzschicht 14 ersetzt. Diese Schutzschicht 14 wurde mit einem schmelzmetallurgisch hergestellten Target der Zusammensetzung 65 Atom-% Aluminium und 35 Atom-% Zirkon gesputtert. Die Glasscheiben wurden 670°C bis zu 12 Minuten getempert, ohne daß sie sichtbare Schäden erlitten hätten. In Tab. 2 sind die Ergebnisse des Kratz- und Abriebtests bei Verwendung der Al-Zr-Legierung aufgeführt. Gegenüber der mit einer reinen Aluminium-Schicht abgedeckten Chrom-Metallschicht 12 tritt eine signifikante Verbesserung auf:

| Zahl der Umdrehungen | Cr – Al (Vergleichsscheibe) | Cr – AlZr (Beispiel 2) |
|---|---|---|
| 1 | 48 | 0 |
| 50 | zerstört | 2 |
| 100 | zerstört | 1 |
| 150 | zerstört | 2 |
| 200 | zerstört | 2 |

Tab. 2: Ergebnisse des Kratz- bzw. Abriebtestes, wobei die Angaben der zweiten und dritten Spalte in Riefen pro cm lauten.

Beispiel 3:

Eine Metallschicht 12 aus Edelstahl (DIN 1.4401) wurde in einer Dicke von 80 nm auf einen Glasträger 10 gesputtert und mit einer 25 nm dicken Al-Zr-Schicht (65/35 Atom-%) abgedeckt. Das Schichtsystem war hochtemperaturfest, feuchtigkeitsbeständig und zeigte eine mit den Beispielen 1 und 2 vergleichbare mechanische Festigkeit.

Beispiel 4:

Es wurde vorgegangen wie nach Beispiel 3, jedoch wurde zwischen dem Glasträger 10 und der Edelstahl-Metallschicht 12 eine als Interferenzschicht ausgebildete Haftschicht 16 aus $Ta_2O_5$ aufgebracht. Hierzu wurde von einer metallischen Tantal-Target gesputtert, wobei eine solche Menge Sauerstoff in den Rezipienten eingelassen wurde, daß sich auf dem Substrat $Ta_2O_5$ niederschlug. Es wurden $Ta_2O_5$-Schichten in Dicken bis zu 80 nm hergestellt. Das gesamte Schichtsystem war hochtemperaturfest, feuchtigkeitsbeständig und besaß eine mit den Beispielen 1 und 2 vergleichbare mechanische Festigkeit.

**Patentansprüche**

1. Verfahren zum Herstellen einer vorgespannten oder gebogenen, mit einer transmissionssenkenden Beschichtung versehenen Glasscheibe, bei dem auf eine Seite der Glasscheibe mindestens eine Metallschicht mit einem überwiegenden Gehalt an mindestens einem Metall oder einer Metallegierung aus den Elementen mit den Ordnungszahlen 22 bis 28 des Periodischen Systems und hierauf eine metallhaltige Schutzschicht aufgebracht werden und anschließend ein thermischer Vorspann- oder Biegeprozeß in Luft bei einer Temperatur zwischen etwa 580°C und 680°C durchgeführt wird, wobei Dicke und Material der Schutzschicht so gewählt werden, daß beim Vorspann- oder Biegeprozeß keine nennenswerte Sauerstoffdiffusion bis zu der Metallschicht stattfindet, dadurch gekennzeichnet, daß bei rückseitiger Anordnung der durch ausreichende Dicke undurchsichtigen, reflektierenden Metallschicht die Schutzschicht aus einer Legierung von Al mit Ti und/oder Zr ausgebildet wird.

2. Verfahren nach Anspruch 1, dadurch gekennzeichnet, daß die Schutzschicht einen Ti- und/oder Zr-Gehalt von mindestens 10 Atom-% aufweist.

3. Verfahren nach Anspruch 2, dadurch gekennzeichnet, daß die Schutzschicht einen Ti- und/oder Zr-Gehalt von mindestens 20 Atom-% aufweist.

4. Verfahren nach Anspruch 1, dadurch gekennzeichnet, daß die Schutzschicht, vorzugsweise aus einer AlTi-Legierung ohne Zr-Anteil bestehend, einen Ti-Gehalt von 30 bis 50 Atom-% aufweist.

5.  Verfahren nach Anspruch 4, dadurch gekennzeichnet, daß die Schutzschicht einen Ti-Gehalt von etwa 40 Atom-% aufweist.

6.  Verfahren nach Anspruch 1, dadurch gekennzeichnet, daß die Schutzschicht, vorzugsweise aus einer AlZr-Legierung ohne Ti-Anteil bestehend, einen Zr-Gehalt von 25 bis 45 Atom-% aufweist.

7.  Verfahren nach Anspruch 6, dadurch gekennzeichnet, daß die Schutzschicht einen Zr-Gehalt von etwa 35 Atom-% aufweist.

8.  Verfahren nach einem der vorangehenden Ansprüche, dadurch gekennzeichnet, daß die Schutzschicht in einer Dicke von 10 bis 50 nm aufgebracht wird.

9.  Verfahren nach Anspruch 8, dadurch gekennzeichnet, daß die Schutzschicht in einer Dicke von 20 bis 30 nm aufgebracht wird.

10.  Verfahren nach einem der vorangehenden Ansprüche, dadurch gekennzeichnet, daß auf den Glasträger vor dem Aufbringen der Metallschicht eine Haftschicht aus mindestens einem der Metalloxide aus der Gruppe $TiO_2$, $Ta_2O_5$, $ZrO_2$ und $SiO_2$ aufgebracht wird.

11.  Verfahren nach Anspruch 10, dadurch gekennzeichnet, daß die Haftschicht in einer derartigen Dicke aufgebracht wird, daß sie als farbverändernde Interferenzschicht wirkt.

12.  Verfahren nach einem der vorangehenden Ansprüche, dadurch gekennzeichnet, daß die Beschichtung zumindest teilweise durch Magnetron-Kathodenzerstäubung aufgebracht wird.

13.  Verfahren nach Anspruch 12, dadurch gekennzeichnet, daß die Schutzschicht durch gleichzeitiges oder alternierendes Sputtern von zwei Kathoden mit einem Al-Target und einem Ti- und/oder Zr-Target aufgebracht wird.

14.  Verfahren nach Anspruch 12, dadurch gekennzeichnet, daß die Schutzschicht durch Sputtern eines schmelz- oder pulvermetallurgisch erzeugten Legierungstargets entsprechender Zusammensetzung aufgebracht wird.

15.  Glasscheibe mit rückseitiger, undurchsichtiger, reflektierender Beschichtung, hergestellt nach dem Verfahren nach einem der vorangehenden Ansprüche.

16.  Verwendung der Glasscheibe nach Anspruch 15 als Rückblickspiegel, Fassadenplatte oder dekoratives Paneel.


## Claims

1.  A method of manufacturing a toughened or curved glass pane provided with a transmission-reducing coating, there being applied to one side of the glass pane at least one metal coating having a predominant content of at least one metal or metal alloy consisting of elements having the numbers 22 to 28 in the periodic system, followed by a metal-containing protective coating, whereafter a thermal toughening or bending process is carried out in air at a temperature of between approximately 580°C and 680°C, the thickness and material of the protective coating being so selected that during the toughening or bending process there is no appreciable oxygen diffusion as far as the metal coating, characterised in that with the reflecting metal coating sufficiently thick as to be opaque applied to the back, the protective coating is formed from an alloy of Al with Ti and/or Zr.

2.  A method according to claim 1, characterised in that the protective coating has a Ti and/or Zr content of at least 10 atom-percent.

3.  A method according to claim 1, characterised in that the protective coating has a Ti and/or Zr content of at least 20 atom-percent.

4.  A method according to claim 1, characterised in that the protective coating, preferably consisting of an AlTi alloy without a Zr fraction, has a Ti content of 30 to 50 atom-percent.

5. A method according to claim 4, characterised in that the protective coating has a Ti content of about 40 atom-percent.

6. A method according to claim 1, characterised in that the protective coating, preferably consisting of an AlZr alloy without a Ti fraction, has a Zr content of 25 to 45 atom-percent.

7. A method according to claim 6, characterised in that the protective coating has a Zr content of about 35 atom-percent.

8. A method according to any one of the preceding claims, characterised in that the protective coating is applied in a thickness of from 10 to 50 nm.

9. A method according to claim 8, characterised in that the protective coating is applied in a thickness of from 20 to 30 nm.

10. A method according to any one of the preceding claims, characterised in that before the metal coating is applied a keying coating is applied to the glass substrate, said keying coating consisting of at least one of the metal oxides of the group $TiO_2$, $Ta_2O_5$, $ZrO_2$ and $SiO_2$.

11. A method according to claim 10, characterised in that the keying coating is applied in a thickness such as to act as a colour-changing interference coating.

12. A method according to any one of the preceding claims, characterised in that the coating is at least partially applied by magnetron cathode sputter.

13. A method according to claim 12, characterised in that the protective coating is applied by simultaneous or alternate sputtering from two cathodes with an Al target and a Ti and/or Zr target.

14. A method according to claim 12, characterised in that the protective coating is applied by sputtering an alloy target of appropriate composition produced by melting or powder metallurgy.

15. A glass pane having an opaque reflective coating on the bock, made by the method according to any one of the preceding claims.

16. Use of the glass pane according to claim 15 as a rear-view mirror, a facing panel or decorative panel.

**Revendications**

1. Procédé pour fabriquer une glace précontrainte ou cintrée munie d'un revêtement diminuant la transmission, dans lequel on dépose sur une face de la glace au moins une couche métallique ayant une teneur prépondérante en au moins un métal ou un alliage métallique constitué des éléments ayant les numéros d'ordre 22 à 28 dans la classification périodique et, après cela, une couche de protection à contenu métallique, et on effectue ensuite, dans l'air, à une température sensiblement comprise entre 580 ° C et 680°C, un processus thermique de précontrainte et de cintrage, l'épaisseur et le matériau de la couche de protection étant choisis de façon telle qu'il ne se produise aucune diffusion d'oxygène notable jusqu'à la couche métallique pendant le processus de précontrainte ou de cintrage, caractérisé en ce qu'on constitue la couche de protection en un alliage de Al avec Ti et/ou Zr lors de la disposition sur la face arrière de la couche métallique réfléchissante rendue opaque par une épaisseur suffisante.

2. Procédé selon la revendication 1, caractérisé en ce que la couche de protection à une teneur en Ti et/ou Zr d'au moins 10 atomes %.

3. Procédé selon la revendication 2, caractérisé en ce que la couche de protection a une teneur en Ti et/ou Zr d'au moins 20 atomes %.

4. Procédé selon la revendication 1, caractérisé en ce que la couche de protection, de préférence constituée en un alliage AlTi sans teneur en Zr, a une teneur en Ti de 30 à 50 atomes %.

5. Procédé selon la revendication 4, caractérisé en ce que la couche de protection a une teneur en Ti de 40 atomes % environ.

6. Procédé selon la revendication 1, caractérisé en ce que la couche de protection, de préférence constituée en un alliage AlZr sans teneur en Ti, a une teneur en Zr de 25 à 45 atomes %.

7. Procédé selon la revendication 6, caractérisé en ce que la couche de protection a une teneur en Zr de 35 atomes % environ.

8. Procédé selon l'une des revendications précédentes, caractérisé en ce que la couche de protection est déposée avec une épaisseur de 10 à 50 nm.

9. Procédé selon la revendication 8, caractérisé en ce que la couche de protection est déposée avec une épaisseur de 20 à 30 nm.

10. Procédé selon l'une des revendications précédentes, caractérisé en ce qu'on dépose sur le support en verre, avant le dépôt de la couche métallique, une couche d'adhérence en au moins l'un des oxydes métalliques du groupe $TiO_2$, $Ta_2O_5$, $ZrO_2$, et $SiO_2$.

11. Procédé selon la revendication 10, caractérisé en ce qu'on dépose la couche d'adhérence avec une épaisseur telle qu'elle agisse comme une couche d'interférence modifiant les couleurs.

12. Procédé selon l'une des revendications précédentes, caractérisé en ce qu'on dépose le revêtement, au moins en partie, par pulvérisation cathodique au magnétron.

13. Procédé selon la revendication 12, caractérisé en ce qu'on dépose la couche de protection par pulvérisation sous vide simultanée ou alternée avec deux cathodes et une cible en Al ainsi qu'une cible en Ti et/ou Zr.

14. Procédé selon la revendication 12, caractérisé en ce qu'on dépose la couche de protection par pulvérisation sous vide avec une cible en alliage de composition appropriée produit par fusion ou par métallurgie des poudres.

15. Glace comportant sur sa face arrière un revêtement réfléchissant opaque, fabriquée suivant le procédé selon l'une des revendications précédentes.

16. Utilisation de la glace selon la revendication 15, en tant que rétroviseur, plaque de façade ou panneau de lambris décoratif.

8

# Fig.1

# Fig.2